# EUROPÄISCHE PATENTANMELDUNG

(11) **EP 2 189 730 A2**
(43) Veröffentlichungstag der Anmeldung: **26.05.2010**
(21) Anmeldenummer: 09176903.4
(22) Anmeldetag: 24.11.2009
(51) Int. Cl.: F24D 19/10

(54) **System zur Versorgung eines Wärmeverbrauchers und Verfahren zum Betreiben eines derartigen Systems**

(30) Priorität: 25.11.2008 DE 102008058933
(71) Anmelder: Wanka, Johann, 61118 Bad Vibel (DE); Bartholomäus, Alexander Christian, 36217 Ronshausen (DE)
(72) Erfinder: Wanka, Johann, 61118 Bad Vibel (DE); Bartholomäus, Alexander Christian, 36217 Ronshausen (DE)
(74) Vertreter: KEIL & SCHAAFHAUSEN Patentanwälte

(57) **Zusammenfassung**

Die Erfindung betrifft ein Verfahren zum Betreiben eines Systems zur Versorgung mindestens eines Wärmeverbrauchers (7, 9, 13, 32) mit Wärmeenergie, wobei das System eine solarthermische Einrichtung (1) mit einem ersten Arbeitsmittel aufweist, mit dem die von der solarthermischen Einrichtung (1) gewonnene Wärmeenergie übertragen wird. Um eine besonders gute Ausnutzung der durch die solarthermische Einrichtung (1) gewonnene Wärmeenergie zu erreichen, erfolgt nur dann eine Übertragung der gewonnenen Wärmeenergie durch das erste Arbeitsmittel an eine Strom erzeugende Einrichtung (20), wenn die Temperatur (T₅) des ersten Arbeitsmittels einen bestimmten, vorgegebenen ersten Temperaturschwellwert (T_{S1}) überschreitet, wobei die Strom erzeugende Einrichtung (20) die übertragene Wärmeenergie in elektrische Energie für die Nutzung durch mindestens einen Stromverbraucher (42) wandelt. Es wird außerdem ein entsprechendes System zur Versorgung mindestens eines Wärmeverbrauchers (7, 9, 13, 32) beschrieben.

## Beschreibung

Die vorliegende Erfindung betrifft ein Verfahren zum Betreiben eines Systems zur Versorgung mindestens eines Wärmeverbrauchers, beispielsweise eine Heizung oder eine Warmwasserversorgung, mit Wärmeenergie, wobei das System eine solarthermische Einrichtung mit einem ersten Arbeitsmittel aufweist, das zur Übertragung der von der solarthermischen Einrichtung gewonnenen Wärmeenergie dient. Die Erfindung betrifft ferner ein entsprechendes System zur Versorgung mindestens eines Wärmeverbrauchers mit Wärmeenergie.

Bei derartigen herkömmlichen Systemen, welche beispielsweise einen Solarkollektor als solarthermische Einrichtung aufweisen, wird die von dem Solarkollektor erzeugte Wärmeenergie zur Versorgung von Wärmeverbrauchern wie einer Heizung oder Brauchwasser genutzt. Ein derartiges System kann auch einen Wärmeenergiespeicher aufweisen, der die durch die solarthermische Einrichtung gewonnene Wärmeenergie speichern und diese zu einem späteren Zeitpunkt dem System wieder bereitstellen kann.

Diese Systeme haben jedoch das Problem, dass es heutzutage nicht möglich ist, die Solarkollektorfläche tatsächlich auf den Lastfall Heizung und/oder Warmwasserversorgung auszulegen, da in diesem Fall in den Sommermonaten eine enorme Überkapazität an Wärme, d.h. an thermischer Energie, entsteht, welche nicht durch das System abgebaut werden kann. Dies könnte zur Zerstörung eines solchen Systems führen. Dies bedeutet, dass in den Wintermonaten häufig nicht die gesamte durch die Heizung und/oder Brauchwasser benötigte Kapazität durch die solarthermische Einrichtung bereitgestellt werden kann, obwohl eine Erweiterung der Fläche der solarthermischen Einrichtung prinzipiell möglich wäre. Folglich wird die zur Verfügung stehende Sonnenenergie durch herkömmliche Systeme nicht optimal ausgenutzt.

Aus der Druckschrift DE 20 2006 017 581 U1 ist eine Vorrichtung zur autarken, ausschließlichen Stromerzeugung mittels solarthermischer Kopplung an einen ORC-Prozess bekannt. Die in dieser Druckschrift beschriebene Vorrichtung geht davon aus, dass derzeit lediglich mittels Fotovoltaikanlagen Strom aus solarer Energie gewonnen werden kann. Da der Wirkungsgrad von durchschnittlichen Fotovoltaikanlagen derzeit nur ca. 8 bis 10% beträgt, wird vorgeschlagen, Strom anstelle durch eine Fotovoltaikanlage mittels solarthermischer Kopplung an einen ORC-Prozess zu erzeugen. Die bekannte Vorrichtung zur autarken Stromerzeugung weist ferner einen Speicher auf, der für die durchgehende Stromerzeugung vorgesehen ist und durch Abschaltung des Kollektors über eine Steuerung temperatur- oder zeitgesteuert die Wärme bereitstellt. Der Einsatzzweck eines derartigen Speichers ist beispielsweise in den Nachtstunden gegeben, in denen von der solarthermischen Einrichtung keine Wärme zur Aufrechterhaltung des ORC-Prozesses und somit für die Stromerzeugung bereitgestellt wird. In den Nachtstunden kann demnach die in dem Speicher gespeicherte Wärmeenergie genutzt werden, um mittels des ORC-Prozesses Strom zu erzeugen. Diese Druckschrift beschäftigt sich demzufolge lediglich mit der Ersetzung von Fotovoltaik-Anlagen durch andere Mittel und trägt zur Lösung des obigen Problems nichts bei. Das Problem der Versorgung von Wärmeverbrauchern mit der durch die solarthermische Einrichtung erzeugten Wärme wird zudem nicht angesprochen.

In der Druckschrift DE 10 2005 036 703 A1 wird ein System mit einer Wärmepumpe beschrieben, bei dem während der Sommerzeit, in dem bei solarthermischer Wärmegewinnung Überschusswärme vorhanden ist, mit einem ORC- bzw. AWKD-Prozess (Absorptions-Wärme-Kälte-Dampfkraftprozess) elektrische Energie gewonnen werden kann, die im Winter für den Betrieb einer Wärmepumpe benötigt wird. Die thermische Solaranlage kann in Verbindung mit einer Wärmepumpe und einem ORC- bzw. AWKD-Prozess nicht nur Heizwärme und/oder Kälte, sondern zusätzlich auch Strom bzw. mechanische Leistung erzeugen. Das System ist auf Grund der benötigten Wärmepumpe vergleichsweise aufwändig und es ist fraglich, ob in der Summe eine Energieeinsparung erreicht wird. Zudem wird bei einer Umkehrung des Wärmepumpenbetriebs von der Wärmeerzeugung zur Stromerzeugung notwendigerweise ein Wechsel des Arbeitsmittels erforderlich sein.

Die Aufgabe der Erfindung besteht demnach darin, ein System zu schaffen bzw. ein Verfahren anzugeben, bei dem die zur Verfügung stehende Sonnenenergie besser als bei den herkömmlichen Systemen ausgenutzt werden kann.

Die obige Aufgabe wird im Wesentlichen gelöst durch ein Verfahren, bei dem zusätzlich mindestens ein Stromverbraucher im System vorgesehen ist, der mit elektrischer Energie versorgt wird, und bei dem die von der solarthermischen Einrichtung gewonnene Wärmeenergie nur dann durch das erste Arbeitsmittel an eine Strom erzeugende Einrichtung übertragen wird, wenn die Temperatur des ersten Arbeitsmittels einen bestimmten, vorgegebenen ersten Temperaturschwellwert überschreitet, wobei die Strom erzeugende Einrichtung die übertragene Wärmeenergie in elektrische Energie für die Nutzung durch den mindestens einen Stromverbraucher wandelt.

Durch die erfindungsgemäße Lösung wird in einem einfach aufgebauten System eine Strom erzeugende Einrichtung, beispielsweise ein ORC-Prozess, ein Kalina-Prozess oder ein CR-Ammoniak-Prozess verwendet, um aus der überschüssigen Wärmeenergie Strom, d.h. elektrische Energie, zu erzeugen. Dieser Strom kann dann zur Versorgung mindestens eines Stromverbrauchers, beispielsweise elektrisch betriebene Geräte, elektrische Speichereinrichtungen, wie eine Batterie, oder dgl. dienen oder in das als Stromverbraucher im weiteren Sinne wirkende Stromnetz zurückgeführt werden. Erfindungsgemäß wird Strom jedoch erst dann erzeugt, wenn die von der solarthermischen Einrichtung bereitgestellte Wärmeenergie so groß ist, dass man annimmt, dass die Wärmeverbraucher des Systems ausreichend mit Wärmeenergie, d.h. thermischer Energie, versorgt sind. Diese Bewertung wird erfindungsgemäß anhand der Temperatur des ersten Arbeitsmittels, das die von der solarthermischen Einrichtung gewonnene Wärmeenergie überträgt, vorgenommen. Wenn nämlich die Temperatur den bestimmten, vorgegebenen ersten Temperaturschwellwert überschreitet, so wird davon ausgegangen, dass nun genügend Wärmeenergie durch die solarthermische Einrichtung bereitgestellt wird, so dass die Wärmeenergieverbraucher versorgt sind bzw. wegen der äußeren Bedingungen (z.B. wegen hoher Außentemperaturen) keine Wärmeenergie benötigen und dass durch die Strom erzeugende Einrichtung elektrische Energie erzeugt werden kann. Hierin eingeschlossen ist auch eine Versorgung der Strom erzeugenden Einrichtung durch einen Teil der von der solarthermischen Einrichtung erzeugten Wärmeenergie, wobei der andere Teil weiterhin den Wärmeenergieverbrauchern zur Verfügung stehen kann. Insgesamt hat die Versorgung der Wärmeenergieverbraucher mit der solarthermisch gewonnenen Wärmeenergie, insbesondere der Heizung und des Warmwassersystems, Vorrang gegenüber der Nutzung der solarthermischen Wärmeenergie zur Erzeugung von elektrischer Energie.

Bei den Wärmeenergieverbrauchern hat in einem Ausführungsbeispiel hinsichtlich der Nutzung der solarthermisch erzeugten Wärmeenergie das Warmwassersystem vor dem Heizungssystem Priorität. Alternativ hierzu kann auch das Heizungssystem bei den Wärmeverbrauchern vor dem Warmwassersystem Priorität haben, nämlich z.B. dann, wenn eine Fußbodenheizung mit einer niedrigen Vorlauftemperatur vorgesehen ist. In diesem Fall kann es vorkommen, dass die Temperatur des ersten Arbeitsmittels lediglich ausreicht, um die Heizung mit der niedrigen Vorlauftemperatur zu versorgen. Alternativ oder zusätzlich kann das in dem Warmwassersystem bereitgestellte Brauchwasser nur vorgewärmt werden.

Das erfindungsgemäße Verfahren hat den Vorteil, dass insbesondere in den Monaten Mai, Juni, Juli und August, in denen sehr viel Solarenergie zur Verfügung steht und gleichzeitig nur wenig Wärmeenergie durch die Wärmeverbraucher benötigt wird, die überschüssige Solarenergie zur Stromerzeugung genutzt werden kann. Bei einer 20 m² großen Kollektorfläche können so in den genannten Monaten von einem einzigen erfindungsgemäßen System, das mit dem erfindungsgemäßen Verfahren betrieben wird, ca. 2.000 kWh erzeugt werden. Dieser Energiebetrag kann beispielsweise als elektrische Energie zurück in das öffentliche oder private Stromnetz gespeist werden, so dass dem jeweiligen Systemeigner entsprechend der heutigen gesetzlichen Rahmenbedingungen eine Vergütung zufließt oder eine externe Stromversorgung nicht in Anspruch genommen werden muss. Zudem ist von Vorteil, dass die solare Energie insbesondere in den Tageszeiträumen zur Verfügung steht, in denen das Stromnetz sehr stark belastet wird, da viele Verbraucher dem Stromnetz Energie entnehmen. Zur Abdeckung des Energiebedarfs zu diesen Spitzenlastzeiten werden heute von den Stromversorgungsunternehmen sehr teure Verbrennungsanlagen betrieben. Gerade zu diesen Tageszeiten ist daher die Einspeisung von elektrischer Energie in das Stromnetz besonders vorteilhaft und kann ggf. dazu führen, dass diese teure Spitzenlastversorgung nicht mehr benötigt wird. Zudem kann die mit dem erfindungsgemäßen Verfahren gewonnene elektrische Energie bei einem Stromausfall des öffentlichen Netzes für das hauseigene Netz zur Verfügung gestellt werden.

In einem Ausführungsbeispiel des erfindungsgemäßen Verfahrens wird die von der solarthermischen Einrichtung gewonnene Wärmeenergie mittels des ersten Arbeitsmittels an ein zweites Arbeitsmittel übertragen, welches in der Strom erzeugenden Einrichtung kursiert bzw. in der Strom erzeugenden Einrichtung verwendet wird. Dies ist von Vorteil, da so das zweite Arbeitsmittel im Bedarfsfall auch durch ein drittes Arbeitsmittel zur Verwendung in der Strom erzeugenden Einrichtung ersetzt werden kann. Zudem lässt sich das zweite Arbeitsmittel an das in der Strom erzeugenden Einrichtung verwendete spezielle Verfahren und den zur Verfügung stehenden Temperaturbereich anpassen und muss nicht zugleich den Anforderungen der solarthermischen Einrichtung genügen.

Von Vorteil ist außerdem, wenn als weitere Bedingung für die Übertragung der gewonnen Wärmeenergie an die Strom erzeugende Einrichtung zusätzlich geprüft wird, ob die Temperatur einer Kühlung geringer ist als der erste Temperaturschwellwert, vorzugsweise um mindestens etwa 5°K, besonders bevorzugt um mindestens etwa 10°K geringer als der erste Temperaturschwellwert. Durch diese zusätzliche Bedingung wird sichergestellt, dass die Strom erzeugende Einrichtung mit einem hohen Wirkungsgrad arbeitet, da bei einer vergleichsweise geringen Temperatur der Kühlung der Strom erzeugenden Einrichtung und einer hohen Ausgangstemperatur, die durch das erste Arbeitsmittel bereitgestellt wird, ein besonders hoher Wirkungsgrad erreicht wird.

Der für die Strom erzeugende Einrichtung zur Verfügung stehende Temperaturbereich, der einerseits von der Temperatur des ersten Arbeitsmittels der solarthermischen Einrichtung und andererseits von der Temperatur der Kühlung bestimmt wird, muss durch das erfindungsgemäße Verfahren auch hinsichtlich der Eigenschaften des in der Strom erzeugenden Einrichtung verwendeten Prozesses bzw. des dort eingesetzten zweiten (oder dritten) Arbeitsmittels beurteilt werden, um die Funktionsfähigkeit des Strom erzeugenden Prozesses zu gewährleisten. Dies bedeutet, dass der erste Temperaturschwellwert beispielsweise so gewählt werden muss, dass im Falle der Verwendung eines ORC-Prozesses in der Strom erzeugenden Einrichtung dieser oberhalb der Verdampfungstemperatur des jeweiligen zweiten (oder dritten) Arbeitsmittels liegt. Außerdem müsste in diesem Fall sichergestellt werden, dass die Kühlung eine Temperatur aufweist, so dass das zweite Arbeitsmittel kondensieren kann.

Als Arbeitsmittel können beispielsweise Kohlenwasserstoffe (z.B. Methan, Butan, FCKW, FKW), Kältemittel (z.B. R123 (2,2-Dichlor-1,1,1-trifluorethan), PF-5050 (Perfluorcarbon) , R227 (Heptafluorpropan)), Alkohole, beispielsweise Methanol und Ethanol, synthetische Arbeitsmittel (z.B. synthetisches Arbeitsmittel auf Silikonbasis GL160) und Silikonöle verwendet werden. Es können auch Gemische eingesetzt werden, beispielsweise ein Gemisch mit den Komponenten Ammoniak und Wasser (Kalina-Verfahren). Der Vorteil beim Einsatz eines Gemischs als zweites Arbeitsmittel besteht darin, dass durch die Zusammensetzung des Gemischs, insbesondere durch die Wahl der Anteile der das Gemisch bildenden Komponenten, die Siedetemperatur eingestellt werden kann. Hierbei kann auch durch eine entsprechende Änderung der Zusammensetzung des Gemischs im laufenden Betrieb des erfindungsgemäßen Systems die Siedetemperatur auf die aktuellen Verhältnisse (z.B. Sommer-/Winterbetrieb) eingestellt werden.

Vorzugsweise beträgt die Siedetemperatur des zweiten Arbeitsmittels zwischen 60°C und 100°C und die Siedetemperatur des dritten Arbeitsmittels zwischen 35°C und 60°C. Dieser Unterschied in den Siedetemperaturen kann beispielsweise beim Sommer- und Winterbetrieb des erfindungsgemäßen Systems genutzt werden.

In einer Weiterbildung des Erfindungsgedankens wird als weitere Bedingung für die Übertragung der gewonnenen Wärmeenergie an die Strom erzeugende Einrichtung zusätzlich geprüft, ob die Temperatur mindestens eines Wärmeverbrauchers über einen bestimmten, vorgegebenen ersten Zeitraum, vorzugsweise mindestens 5 Minuten, über oder bei einem bestimmten, vorgegebenen zweiten Temperaturschwellwert lag und/oder ob die Wärmeenergieanforderung mindestens eines Wärmeverbrauchers einen Wärmeenergieschwellwert unterschreitet. Diese zusätzliche Bedingung dient dazu, den Systemzustand zu beurteilen bzw. auf vorliegende äußere Bedingungen zurückzuschließen. Wenn die Temperatur eines Wärmeverbrauchers über einen längeren Zeitraum oberhalb einer bestimmten Temperatur lag bzw. ein Wärmeverbraucher nur einen geringen Wärmeenergiebedarf hat, so wird davon ausgegangen, dass entweder die äußeren Bedingungen keine weitere Bereitstellung von Wärmeenergie erfordern (z.B. weil es draußen sommerlich warm ist, wird keine Heizung benötigt) bzw. dass das System sich in einem stabilen Zustand befindet. In diesem Fall kann zumindest ein Teil der von der solarthermischen Einrichtung gewonnenen Wärmeenergie für die Erzeugung von elektrischer Energie genutzt werden.

In einem weiteren Ausführungsbeispiel der Erfindung wird mindestens während eines bestimmten, vorgegebenen zweiten Zeitraums zumindest ein Teil der von der solarthermischen Einrichtung gewonnenen Wärmeenergie zu einem Wärmeverbraucher in Form eines Wärmespeichers abgeführt. Hierdurch wird überschüssige Wärmeenergie gespeichert und zu einem späteren Zeitpunkt für die Erzeugung von elektrischer Energie bzw. als Wärmeenergie für die Wärmeverbraucher genutzt. Insbesondere wird die in einem bestimmten, vorgegebenen dritten Zeitraum durch die Strom erzeugende Einrichtung benötigte Wärmeenergie zusätzlich oder ausschließlich aus dem Wärmespeicher entnommen.

In einer Weiterbildung der Erfindung wird die Möglichkeit der Übertragung von Wärmeenergie an die Strom erzeugende Einrichtung insbesondere in mindestens einem bestimmten, von dem Betreiber des Systems oder einer externen Stelle, z.B. einem Energieversorgungsunternehmen, vorgegebenen vierten Zeitraum geprüft. Diese Ausführungsform der vorliegenden Erfindung ist beispielsweise dann von Vorteil, wenn dem jeweiligen Betreiber des Systems durch ein Energieversorgungsunternehmen signalisiert wird, dass in einem bestimmten Zeitraum ein großer Bedarf an elektrischer Energie bestehen wird und deshalb eine zusätzliche Einspeisung von elektrischer Energie gewünscht wird. In diesem vierten Zeitraum könnte demnach der jeweilige Betreiber des Systems ggf. eine besonders hohe Vergütung erzielen, so dass es sich für ihn lohnt, in diesem Zeitraum beispielsweise öfter die Temperatur des ersten Arbeitsmittels zu prüfen oder ggf. den ersten Temperaturschwellwert herabzusetzen, so dass mittels des erfindungsgemäßen Verfahrens schneller und/oder länger elektrische Energie erzeugt werden kann, die dann für die Einspeisung in das öffentliche/private Stromnetz zur Verfügung steht. In einem weiteren Ausführungsbeispiel kann der vierte Zeitraum durch Handeingabe oder durch eine von außerhalb des Systems übertragene Vorgabe, d.h. beispielsweise durch die Anforderung der Netzbetreiber, verändert werden.

Selbstverständlich kann die durch die solarthermische Einrichtung gewonnene Wärmenergie durch das erste Arbeitsmittel auch weiterhin zumindest in einem bestimmten, vorgegebenen fünften Zeitraum an den mindestens einen Wärmeverbraucher übertragen werden.

Die obige Aufgabe wird ferner durch ein System gelöst, bei dem zusätzlich mindestens ein Stromverbraucher vorgesehen ist, der mit elektrischer Energie versorgt wird, wobei das System derart eingerichtet ist, dass nur dann eine Übertragung der gewonnenen Wärmeenergie durch das erste Arbeitsmittel an eine Strom erzeugende Einrichtung erfolgt, wenn die Temperatur des ersten Arbeitsmittels einen bestimmten, vorgegebenen ersten Temperaturschwellwert überschreitet, wobei die Strom erzeugende Einrichtung die übertragene Wärmeenergie in elektrische Energie für die Nutzung durch den mindestens einen Stromverbraucher wandelt.

Das erfindungsgemäße System weist analog die oben im Zusammenhang mit den erfindungsgemäßen Verfahren genannten Vorteile auf. Ferner entsprechen Ausführungsbeispiele des erfindungsgemäßen Systems den oben angegebenen Ausführungsbeispielen des erfindungsgemäßen Verfahrens.

In einem weiteren Ausführungsbeispiel ist das erfindungsgemäße System derart ausgestaltet, dass der Volumenstrom des ersten Arbeitsmittels zwischen dem mindestens einen Wärmeverbraucher und der Strom erzeugenden Einrichtung aufteilbar ist. Hierdurch wird eine gleichzeitige Versorgung des mindestens einen Wärmeverbrauchers und der Strom erzeugenden Einrichtung mit der von der solarthermischen Einrichtung gewonnenen Wärmeenergie ermöglicht.

Weiterbildungen, Vorteile und Anwendungsmöglichkeiten der Erfindung ergeben sich auch aus der nachfolgenden Beschreibung von Ausführungsbeispielen und aus den Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung.

Es zeigen schematisch:
- Fig. 1: ein erstes Ausführungsbeispiel eines erfindungsgemäßen Systems,
- Fig. 2: ein zweites Ausführungsbeispiel eines erfindungsgemäßen Systems,
- Fig. 3: eine andere Darstellung des ersten Ausführungsbeispiels des erfin- dungsgemäßen Systems,
- Fig. 4: ein Ablaufdiagramm eines erfindungsgemäßen Verfahrens und
- Fig. 5: ein Diagramm, in dem unter Anderem der Energiebedarf eines Gebäu- des und die durch eine solarthermische Einrichtung erzeugte Wärme- energie über den Zeitraum eines Kalenderjahres aufgetragen sind.

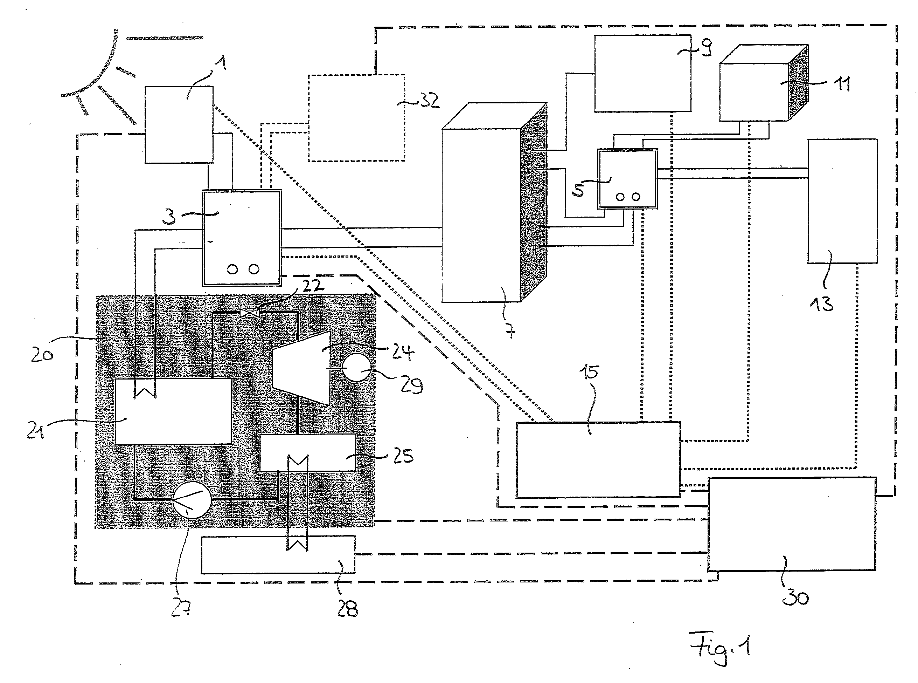

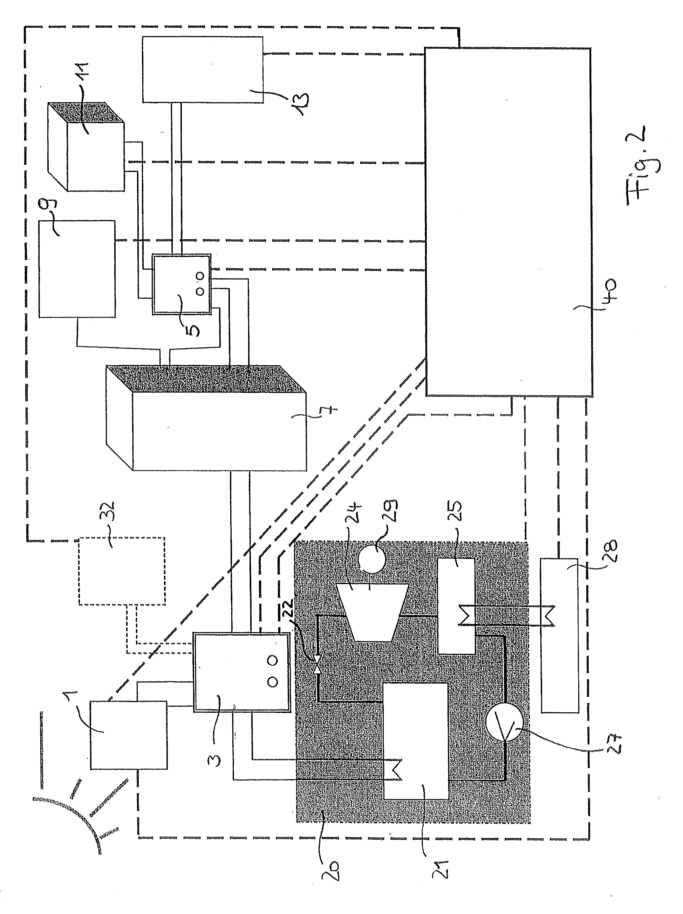

In dem in Figur 1 dargestellten erfindungsgemäßen System ist eine solarthermische Einrichtung in Form eines Solarkollektors 1 über eine Einheit 3 mit einem Wärmetauscher eines Warmwasserspeichers 7 verbunden. In dem Warmwasserspeicher 7 wird die von einem ersten Arbeitsmittel, mit dem der Solarkollektor 1 arbeitet, übertragene Wärmeenergie zur Nutzung in dem Warmwassersystem 9 und in dem Heizungssystem 13 an das in der Heizung und dem Warmwassersystem genutzte vierte Arbeitsmittel übertragen. Hierfür ist der Warmwasserspeicher 7 über eine Einheit 5 mit dem Warmwassersystem 9 und dem Heizungssystem 13 verbunden. Der Warmwasserspeicher 7 kann als Kombispeichersystem oder Zweispeichersystem ausgebildet sein. Eine Wasserzuführungsleitung, die zu dem Warmwasserspeicher 7 hinführt, wurde aus Gründen der Übersichtlichkeit in den Figuren 1 und 2 nicht dargestellt.

Ferner ist ein Heizkessel 11 vorgesehen, der beispielsweise mittels eines fossilen Brennstoffs wie Gas oder Öl betrieben werden kann und ebenfalls zur Wärmeversorgung des Heizungssystems 13 und des Warmwassersystems 9 dient, wenn keine Versorgung des Warmwassersystems 9 und des Heizungssystems 13 durch Solarkollektorwärme erfolgt. Hierfür ist der Heizkessel 11 über die Einheit 5 mit dem Warmwassersystem 9 und dem Heizungssystem 13 verbunden.

Die Einheiten 3 und 5 sind mit mindestens einem Ventil und/oder mindestens einem Mischer und/oder mindestens einer Pumpe versehen, so dass durch diese Einheiten 3, 5 die Steuerung des Flusses und der Durchflussmengen der entsprechenden Arbeitsmittel erfolgt. Die Verbindung der Einheiten 3, 5 mit den jeweiligen Elementen des erfindungsgemäßen Systems erfolgt jeweils durch eine Hin- und eine Rückleitung, welche das jeweilige Arbeitsmittel führen (außer bei der Verbindung der Einheit 5 mit dem Warmwassersystem 9, dort ist nur eine hinführende Verbindung vorgesehen, aus Gründen der Übersichtlichkeit wurde auf die Darstellung der Warmwasserzirkulationsleitung verzichtet).

Es ist außerdem eine herkömmliche Regelung oder Steuerung 15 vorgesehen, welche die Regelung oder Steuerung des Solarkollektors 1, der Einheit 3, der Einheit 5, des Warmwasserspeichers 7, des Warmwassersystems 9, des Heizkessels 11 und des Heizungssystems 13 hinsichtlich der Erzeugung von solarthermischer Wärmeenergie und deren Verbrauch durch die Wärmeenergieverbraucher 7, 9, 13 vornimmt und somit mit den genannten Baueinheiten des Systems auch jeweils über eine Regel- oder Steuerleitung verbunden ist. Das erfindungsgemäße System weist ferner eine Strom erzeugende Einrichtung 20 auf, die beispielsweise als ORC-Prozess, aber auch als Kalina-Prozess oder CR-Ammoniak-Prozess ausgebildet sein kann. Die Strom erzeugende Einrichtung 20 ist über die Einheit 3 mit dem Solarkollektor 1 verbunden.

Die Strom erzeugende Einrichtung 20, die in dem in Figur 1 abgebildeten System den ORC-Prozess nutzt, weist einen Wärmetauscher 21 auf, in dem die in einem ersten Arbeitsmittel enthaltene Wärmenergie an ein zweites Arbeitsmittel weitergegeben wird, das innerhalb des Strom erzeugenden Prozesses 20 eingesetzt wird. Hierbei wird durch das erste Arbeitsmittel die von dem Solarkollektor 1 gewonnene Wärmeenergie zur Strom erzeugenden Einrichtung 20 bzw. zu den Wärmeverbrauchern 7, 9, 13 übertragen. Der Wärmetauscher 21 ist verbunden mit einem Ventil 22, das zur Prozessunterbrechung oder als Schutzschalter dient, einer Turbine 24, einem Kondensator 25, einer Kondensatpumpe 27, die wiederum mit dem Wärmetauscher 21 verbunden ist. Ferner ist eine Kühlung 28 vorgesehen, beispielsweise eine Wasser- oder Luftkühlung, mit der der Kondensator 25 gekühlt wird.

In der Strom erzeugenden Einrichtung 20, welche in dem dargestellten bevorzugten Ausführungsbeispiel einen ORC-Prozess verwirklicht, wird eine in dem Wärmetauscher 21 aufgenommene Wärmeenergie dazu verwendet, das zweite Arbeitsmittel zu verdampfen und zu überhitzen. Durch das verdampfte und überhitzte zweite Arbeitsmittel wird die Turbine 24 angetrieben, in der der Dampf annähernd adiabat expandiert. In dem Kondensator (Verdampfer) 25 wird der Dampf isobar und isotherm kondensiert durch Kühlung mittels des Kühlkreislaufs 28, der beispielsweise mit Luft oder Wasser betrieben werden kann. Durch die Kondensatpumpe 27 wird das zweite Arbeitmittel zurück in den Wärmetauscher 21 gefördert. Ein mit der Turbine 24 verbundener Generator 29 dient zur Erzeugung des elektrischen Stroms.

In dem ORC-Prozess werden als zweites Arbeitsmittel organische Flüssigkeiten, beispielsweise Kohlenwasserstoffe oder Silikonöle, mit einer niedrigen Verdampfungstemperatur verwendet. Der ORC-Prozess kommt - und das ist bei dem erfindungsgemäßen System häufig gegeben - insbesondere dann zum Einsatz, wenn das zur Verfügung stehende Temperaturgefälle zwischen Wärmequelle (erstes Arbeitsmittel bzw. Solarkollektor 1) und -senke (Temperatur der Kühlung 28) zu niedrig für den Betrieb mittels Wasser ist.

Das erfindungsgemäße System weist ferner eine zweite Regelungs- oder Steuereinheit 30 auf, die mit der herkömmlichen Regelung oder Steuerung 15 sowie mit dem Solarkollektor 1, der Kühlung 28, dem Strom erzeugenden Prozess 20 und der Einheit 3 verbunden ist. Die zweite Regelungs- oder Steuereinheit 30 verwirklicht in Zusammenwirken mit der ersten Regelung- oder Steuerung 15 das erfindungsgemäße Verfahren.

In einem weiteren Ausführungsbeispiel des erfindungsgemäßen Systems ist außerdem ein Speicher 32 für thermische Energie vorgesehen, der über die Einheit 3 mit dem Solarkollektor 1 verbunden ist. Der Speicher 32 ist ebenfalls mit der zweiten Regelungs- oder Steuereinheit 30 verbunden und wird somit durch diese ebenfalls geregelt bzw. gesteuert.

In dem anhand von Figur 2 dargestellten zweiten Ausführungsbeispiel eines erfindungsgemäßen Systems werden die beiden Regelungen oder Steuerungen 15, 30 des in Figur 1 dargestellten Ausführungsbeispiels ersetzt durch eine einzige, zusammengeführte Regelung oder Steuerung 40. Der Vorteil dieses Ausführungsbeispiels liegt darin, dass so Steuerleitungen gespart werden können, da die Regelung oder Steuerung 40 nur einmal mit jedem Element des Systems - falls nötig - verbunden werden muss, während bei Verwendung zweier getrennter Regelungen eine Verbindung mit dem jeweiligen Bauteil des Systems ggf. zweifach erfolgen muss (vgl. Verbindungen zu der Einheit 3 oder zu dem Solarkollektor 1 in Figur 1).

Die in den Figuren 1 und 2 dargestellten Verbindungen der Systemkomponenten umfassen Verbindungen, über die eine Wärmeenergieübertragung mittels des entsprechenden Arbeitsmittels erfolgt. Diese Verbindungen sind als durchgezogene Linien dargestellt, mit Ausnahme der Verbindung zu dem Speicher 32, die gestrichelt dargestellt ist. Die in den Figuren 1 oder 2 gezeigten Regel- oder Steuerleitungen sind gestrichelt oder gepunktet dargestellt.

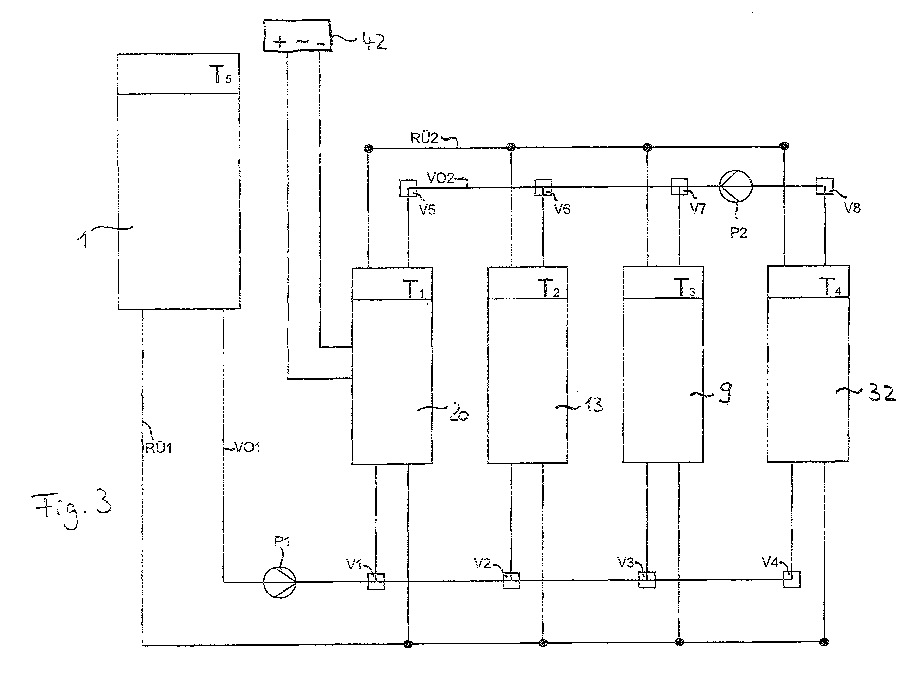

Anhand des in Figur 3 dargestellten erfindungsgemäßen Systems, das auf andere Weise das in Figur 1 dargestellte System veranschaulicht, soll im Folgenden das erfindungsgemäße Verfahren bzw. die Funktionsweise des Systems erläutert werden.

Der Solarkollektor 1 ist durch die Versorgungsleitung VO1 jeweils parallel mit der Strom erzeugenden Einrichtung 20, die beispielsweise einen ORC-Prozess verwendet, sowie mit der konventionellen Heizung bestehend aus Warmwasserspeicher 7, Heizkessel 11 und Heizungssystem 13, d.h. hier insbesondere mit dem Heizungssystem 13, mit der konventionellen Warmwasserversorgung bestehend aus Warmwasserspeicher 7, Warmwassersystem 9 und Heizkessel 11, d.h. hier insbesondere mit dem Warmwassersystem 9, und optional mit einem Warmwasserspeicher 32 verbunden. Der Warmwasserspeicher 32 ist ein thermischer Speicher und dient zur Speicherung von Wärmeenergie. Als Speichermedium können beispielsweise ein oder mehrere Mittel ausgewählt aus der Gruppe umfassend Wasser, ÖI, Paraffin und Silikonöl eingesetzt werden. Die Rückverbindung der genannten Elemente zum Solarkollektor 1 erfolgt über die Leitung RÜ1, welche das erste Arbeitsmittel enthält. Das in der Versorgungsleitung VO1 fließende erste Arbeitsmittel wird durch eine Pumpe P1 gefördert, die vor dem Abzweig zu der Strom erzeugenden Einrichtung angeordnet ist.

Ferner ist eine Versorgungsleitung V02 vorgesehen, die, falls ein Speicher 32 für Wärmeenergie vorgesehen ist, vom Speicher 32 für die Wärmeenergie jeweils parallel zu dem Warmwassersystem 9, dem Heizungssystem 13 und dem Strom erzeugenden Prozess 20 führt. Das in dieser Leitung enthaltene vierte Arbeitsmittel wird mit der Pumpe P2 gefördert, die zwischen dem Wärmeenergiespeicher 32 und dem Abzweig zum Warmwassersystem 9 vorgesehen ist. Die Rückübertragung des vierten Arbeitsmittels erfolgt über die Leitung RÜ2. Der Strom erzeugende Prozess 20 ist ferner mit einem Stromverbraucher 42, beispielsweise dem öffentlichen Netz, verbunden.

Jedem Element des Systems ist eine Temperatur zugeordnet, die in dem jeweiligen Element gemessen wird. Die im Solarkollektor 1 herrschende Temperatur und somit die Temperatur des ersten Arbeitsmittels wird im Folgenden mit T₅ bezeichnet, die in der Strom erzeugenden Einrichtung 20 gemessene Temperatur mit T₁, die Temperatur des Heizungssystems 13 mit T₂, die Temperatur des Warmwassersystems 9 mit T₃ und ggf. die Temperatur im Wärmeenergiespeicher 32 mit T₄.

Die Temperatur T₅ wird am Solarkollektor 1 gemessen, insbesondere am Vorlauf des Solarkollektors 1, weitere Messungen, beispielsweise am Rücklauf oder in der Mitte der Höhe des Kollektors sind möglich. Die Temperatur T₁ wird am Wärmetauscher 21, insbesondere am Ausgang des Wärmetauschers 21 in Richtung Ventil 22, gemessen, weitere Messungen können am Kondensator 25 und an der Kühlung 28 erfolgen. Eine weitere Messung von T₁ könnte etwa in der Mitte Höhe des Wärmetauschers 21 erfolgen, um das Temperaturgefälle des zweiten bzw. dritten Arbeitsmittels zu ermitteln. Die für das Warmwassersystem 9 maßgebliche Temperatur T₃ wird beispielsweise am Warmwasserspeicher 7, die für das Heizungssystem 13 maßgebliche Temperatur T₂ wird je nach Ausgestaltung des Heizungssystems 13 über eine Temperaturmessung in der Brennkammer des Heizkessels 11 bzw. über einen Außenfühler bestimmt, der beispielsweise an einer Außenwand des Gebäudes angebracht ist. Die Temperaturmessung für T₄ erfolgt am Vorlauf und ggf. auch am Rücklauf der Be- und Entladung des Wärmeenergiespeichers 32. Die Temperaturmessung am Rücklauf ermöglicht festzustellen, wie viel Energie aus dem Wärmeenergiespeicher 32 entnommen wurde.

Im Folgenden wird auch davon ausgegangen, dass das Element 30 des erfindungsgemäßen Systems als Regelung ausgebildet ist.

Wenn die Temperatur T₅ des Solarkollektors 1 einen ersten Temperaturschwellwert T_{S1} überschreitet, dann öffnet die Regelung 30 das Ventil V1, das die Versorgungsleitung VO1 mit der Strom erzeugenden Einrichtung 20 verbindet. Die Strom erzeugende Einrichtung 20 wird so mit von dem Solarkollektor 1 gewonnener Wärmeenergie versorgt und erzeugt mittels eines ORC-Prozesses Strom. Die gewonnene elektrische Energie wird einem Stromverbraucher 42 zugeführt, der mit der Strom erzeugenden Einrichtung 20 verbunden ist.

Falls die Temperatur T₅ des Solarkollektors 1 kleiner ist als der erste Temperaturschwellwert T_{S1}, so werden durch den Solarkollektor 1 lediglich das Heizungssystem 13 und/oder das Warmwassersystem 9 mit Wärmeenergie versorgt. Entsprechend werden lediglich die Ventile V2 und/oder V3 geöffnet und das Ventil V1 geschlossen, wobei das Ventil V2 die Versorgungsleitung VO1 mit dem Heizungssystem 13 und das Ventil V3 die Versorgungsleitung VO1 mit dem Warmwassersystem 9 verbindet. Die Ventile V2 und V3 werden ebenfalls durch die Regelung 30 gesteuert.

Zusätzlich prüft die Regelung 30 in einem weiteren Ausführungsbeispiel, ob die Temperatur T₂ des Heizungssystems 13 und/oder die Temperatur des Warmwassersystems 9 bereits 5 Minuten über einem jeweiligen separat vorgegebenem zweiten Temperaturschwellwert T_{S2} liegt. Falls ja, erkennt die Regelung 30, dass diese Elemente zunächst keine Wärmeenergie mehr benötigen und schließt die Ventile V2 und V3, so dass der Strom erzeugenden Einrichtung 20 ggf. mehr Wärmeenergie zur Verfügung steht.

In einem anderen Ausführungsbeispiel nimmt die Regelung 30 dann, wenn beispielsweise die Temperatur T₅ oberhalb eines dritten Temperaturschwellwerts T_{S3} liegt, an, dass der Solarkollektor 1 genügend Wärmeenergie bereitstellt, um einen Wärmeenergiespeicher 32 mit Wärmeenergie zu versorgen. Entsprechend wird durch die Regelung 30 das Ventil V4 angesteuert und geöffnet, das die Versorgungsleitung VO1 mit dem Wärmeenergiespeicher 32 verbindet.

In einem anderen Fall wird geprüft, ob die in dem Wärmeenergiespeicher 32 gespeicherte Wärmeenergie für andere Systemelemente zur Verfügung gestellt werden kann. Hierfür kann beispielsweise die Temperatur T₄ des Wärmeenergiespeichers 32 ermittelt und geprüft werden, ob diese oberhalb eines fünften Temperaturschwellwerts T_{S5} liegt. Reicht die Wärmeenergie des Wärmeenergiespeichers 32 aus, so kann diese Wärmeenergie der Strom erzeugenden Einrichtung 20 und/oder dem Heizungssystem 13 und/oder dem Warmwassersystem 9 zur Verfügung gestellt werden, je nachdem wo die Temperaturen dieser Systemelemente liegen. Hierfür wird die Pumpe P2 in Betrieb genommen und eines oder mehrere der Ventile V5, V6 und V7 geöffnet. Hierbei verbindet das Ventil V5 die Versorgungsleitung V02 mit dem Strom erzeugenden Prozess 20, das Ventil V6 die Versorgungsleitung VO2 mit dem Heizungssystem 13 und das Ventil V7 die Versorgungsleitung V02 mit dem Warmwassersystem 9.

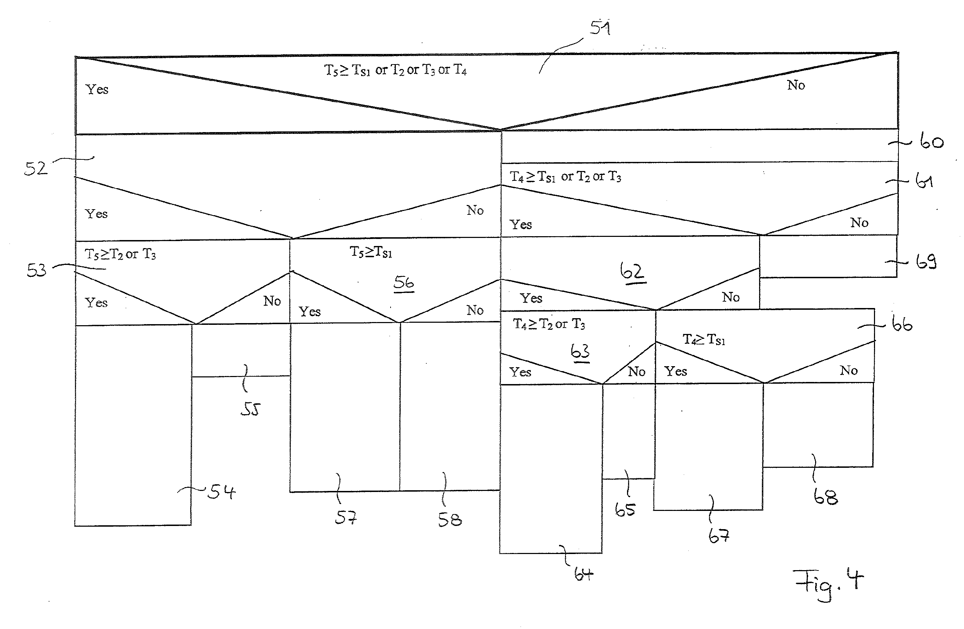

Ein weiteres Ausführungsbeispiels eines erfindungsgemäßen Verfahrens, das durch die Regelung 30 ausgeführt wird, ist in Figur 4 dargestellt. Die einzelnen Schritte des Ausführungsbeispiels werden im Folgenden erläutert.

In einem ersten Schritt 51 des Verfahrens wird geprüft, ob die Temperatur T₅ des Solarkollektors 1 größer oder gleich dem ersten Temperaturschwellwert T_{S1} der Strom erzeugenden Einrichtung 20 oder der Temperatur T₂ des Heizungsystems 13 oder der Temperatur T₃ des Warmwassersystems 9 oder der Temperatur T₄ des Wärmespeichers 32 ist. Hierbei und analog auch bei den folgenden, in Figur 4 dargestellten Bedingungen bzw. Fragen bedeutet "oder" (= "or" in Figur 4) eine logische ODER-Verknüpfung. Diese ist wahr (= ja), wenn mindestens eine Bedingung zutrifft, d.h. wenn im vorangestellten Fall die Temperatur T₅ des Solarkollektors 1 größer oder gleich mindestens einer der Temperaturen T_{S1}, T₂, T₃ und T₄ ist. Wenn ja (im Folgenden bedeutet "Ja" = "Yes" in Figur 4, "Nein" = "No" in Figur 4), so gelangt das Verfahren zu dem Schritt 52 und es wird nun geprüft, ob Wärmeleistung auch für das Heizungssystem 13 und/oder das Warmwassersystem 9 gebraucht wird. Hierbei wird von der Steuerung oder Regelung 15 kommuniziert, ob Wärmeleistung für das Heizungssystem 13 und/oder das Warmwassersystem 9 gefordert wird. Diese Forderung leitet die Steuerung oder Regelung 15 beispielsweise aus den von einem Temperaturfühler für das Warmwassersystem und/oder einem Temperaturfühler in der Brennkammer des Heizkessels 11 sowie einem Außentemperaturfühler gewonnenen Temperaturdaten ab. Diese Daten werden von der Steuerung oder Regelung 15 an die Regelung 30 übertragen.

Falls dies der Fall ist, wird in Schritt 53 nochmals geprüft, ob die Temperatur T₅ des Solarkollektors 1 größer oder gleich der Temperatur T₂ des Heizungssystems 13 oder der Temperatur T₃ des Warmwassersystems 9 ist. Ist dies der Fall, so wird die Pumpe P1 in Betrieb genommen und die Ventile V2 und/oder V3 werden geöffnet (Schritt 54).

Der Schritt 52 sowie der sich anschließende Schritt 53 beinhalten das grundlegende Prinzip des erfindungsgemäßen Systems bzw. des erfindungsgemäßen Verfahrens, dass vor der Versorgung der Strom erzeugenden Einrichtung 20 durch die von dem Solarkollektor 1 gewonnenen Wärmeenergie die Versorgung des Heizungssystems 13 und/oder des Warmwassersystems 9 - sofern vorhanden - durch die Wärmeenergie des Solarkollektors 1 (oder einer anderen solarthermischen Einrichtung) Vorrang hat.

Falls in Schritt 53 die Bedingung verneint wird, so wird der Schritt 55 ausgeführt. Dieser Schritt springt zu Schritt 56. In Schritt 56 wird geprüft, ob die Temperatur T₅ des Solarkollektors 1 größer oder gleich dem ersten Temperaturschwellwert T_{S1} der Strom erzeugenden Einrichtung 20 ist. Ist dies der Fall, so wird die Pumpe P1 in Schritt 57 angeschaltet und das Ventil V1 geöffnet, so dass die Strom erzeugende Einrichtung 20 mit Wärmeenergie des Solarkollektors 1 versorgt wird und elektrische Energie generiert.

Wird die Bedingung in Schritt 56 mit "Nein" beantwortet, so kann ggf. mit der Wärmeenergie des Solarkollektors 1 noch der Speicher 32 mit Wärmeenergie versorgt werden (Schritt 58), wenn T₅ größer oder gleich T₄ ist.

Wird der Schritt 51 mit "Nein" beantwortet, so bleibt die Pumpe P1 aus oder wird ausgeschaltet (Schritt 60). Anschließend wird in Schritt 61 gefragt, ob die Temperatur T₄ des Wärmespeichers 32 größer oder gleich dem Temperaturschwellwert T_{S1} der Strom erzeugenden Einrichtung 20 oder der Temperatur T₂ des Heizungssystems 13 oder der Temperatur T₃ des Warmwassersystems 9 ist. Falls diese Frage mit "Ja" beantwortet wird, so wird das Verfahren mit Schritt 62 fortgesetzt und gefragt, ob Wärmeleistung aus dem Wärmeenergiespeicher 32 für das Heizungssystem 13 oder das Warmwassersystem 9 gebraucht wird. Hierbei wird von der Steuerung oder Regelung 15 kommuniziert, ob Wärmeleistung für das Heizungssystem 13 und/oder das Warmwassersystem 9 gefordert wird. Diese Forderung leitet die Steuerung oder Regelung 15 beispielsweise aus den von einem Temperaturfühler für das Warmwassersystem und/oder einem Temperaturfühler in der Brennkammer des Heizkessels 11 sowie einem Außentemperaturfühler gewonnenen Temperaturdaten ab. Diese Daten werden von der Steuerung oder Regelung 15 an die Regelung 30 übertragen. Wird die Frage in Schritt 62 mit "Ja" beantwortet, so wird in Schritt 63 weiter gefragt, ob die Temperatur T₄ des Wärmespeichers 32 größer oder gleich der Temperatur T₂ des Heizungssystems 13 oder der Temperatur T₃ des Warmwassersystems 9 ist. Falls diese Frage mit "Ja" beantwortet wird, so wird das Verfahren mit Schritt 64 fortgesetzt. In diesem Verfahrensschritt wird die Pumpe P2 angeschaltet und die Ventile V6 und/oder V7 werden geöffnet, je nachdem, ob das Heizungssystem 13 und/oder das Warmwassersystem 9 Wärmeenergie benötigt. Hierbei hat das Warmwassersystem 9 jedoch Vorrang vor der Versorgung des Heizungssystems 13. Die von dem Wärmespeicher 32 zur Verfügung gestellte Wärmeenergie kann dabei zur vollständigen Erwärmung oder lediglich Vorwärmung des im Warmwassersystem 9 und/oder im Heizungssystem 13 benötigten Wassers dienen.

Wird die Frage in Schritt 63 mit "Nein" beantwortet, so springt das Verfahren in Schritt 65 zu Schritt 66. In Schritt 66 wird gefragt, ob die Temperatur T₄ des Wärmeenergiespeichers 32 größer oder gleich der erste Temperaturschwellwert T_{S1} der Strom erzeugenden Einrichtung 20 ist. Ist dies der Fall, so wird das erfindungsgemäße Verfahren mit dem Schritt 67 fortgesetzt. In Schritt 67 wird die Pumpe P2 angeschaltet und das Ventil V5 geöffnet, so dass die Strom erzeugende Einrichtung 20 aus dem Wärmeenergiespeicher 32 mit thermischer Energie versorgt wird. Entsprechend erzeugt die Strom erzeugenden Einrichtung 20 elektrische Energie, die an den Stromverbraucher 42 weitergeleitet wird. Wird die Frage in Schritt 66 mit "Nein" beantwortet, so bleibt die Pumpe P2 in Schritt 68 ausgeschaltet oder die Pumpe P2 wird ausgeschaltet.

Wird die Frage in Schritt 61 mit "Nein beantwortet, so wird das Verfahren mit Schritt 69 fortgesetzt, in dem analog zu Schritt 68 die Pumpe P2 ausgeschaltet bleibt oder ausgeschaltet wird.

Die Ventile V1, V2, V3, V4, V5, V6, V7 sowie die Pumpen P1 und P2 sind Bestandteile der in Figur 1 dargestellten Einheiten 3 und 5.

Als weitere Eingangsgrößen für die Regelungen oder Steuerungen 15, 30 und 40 können Datum und Uhrzeit verwendet werden. Als weitere Steuergrößen können Ventilstellungen, Pumpenleistungen und ggf. Mischerstellungen berücksichtigt werden. Die Regelung hat folgende Prioritäten: Die Heizungs- und Warmwasserversorgung (sowie ggf. Klima/Lüftung) hat Vorrang vor der Erzeugung elektrischer Energie oder der Übertragung von Wärmeenergie in den Wärmeenergiespeicher. Falls dem System auch noch Wärmeenergie aus konventioneller Erzeugung (beispielsweise durch einen Gasbrenner) zugeführt wird, was in einem Ausführungsbeispiel der vorliegenden Erfindung gegeben sein kann, so soll die Wärmeenergie aus der solarthermischen Einrichtung bevorzugt gegenüber der Energie aus konventioneller Erzeugung verwendet werden. Ggf. soll bei einem Stromausfall die konventionell erzeugte Wärmeenergie zur Stromerzeugung verwendet werden.

Bei Bedarf kann die Regelung, die mit dem erfindungsgemäßen Verfahren arbeitet, so erweitert werden, dass sie als zusätzliche Eingangsgröße den eigenen Stromverbrauch misst. Entsprechend des eigenen Stromverbrauchs kann sie dann die Strom erzeugenden Einrichtung 20 ansteuern, um Spannungsspitzen im eigenen Stromverbrauch, beispielsweise auch durch Einsatz des Wärmespeichers 32, abzumildern. In einer weiteren Variante kann zu Tageszeitpunkten, die mit einem Netzbetreiber/Energieversorgungsunternehmen abgestimmt sind, bevorzugt eine Einspeisung von elektrischer Energie, die durch die Strom erzeugende Einrichtung 20 hergestellt wurde, in das öffentliche Netz erfolgen. Optional kann die Regelung mit dem Netzbetreiber/Energieversorgungsunternehmen kommunizieren, um die elektrische Energie auf Verlangen ins Stromnetz abzugeben.

Ferner können mehrere Speicher 32 vorgesehen werden, die thermische Energie speichern können.

In einem weiteren Ausführungsbeispiel können mehrere Strom erzeugende Einrichtungen 20 vorgesehen sein, die eine variable Leistungsabgabe aufweisen. Diese können entsprechend angesteuert werden.

Ein bevorzugtes Einsatzgebiet für das erfindungsgemäße Verfahren bzw. das erfindungsgemäße System sind kleine, mittlere und auch große Anlagen. Als kleine Anlagen können einzelne Haushalte bzw. Wohnhäuser mit dem erfindungsgemäßen System versehen oder ggf., wie in Figur 1 dargestellt, nachgerüstet werden (vgl. zusätzliche Regelung 30). Als große Anlagen könnten z.B. große Möbelhäuser, Schulen, Schwimmbäder, öffentliche Gebäude usw. mit dem erfindungsgemäßen System ausgestattet werden. Der Einsatz ist überall dort sinnvoll, wo saisonal Heizwärme gebraucht wird. In einem Schwimmbad könnte beispielsweise eine große Solarkollektorfläche selbst bei relativ niedrigen Solarkollektortemperaturen bei kalten Außentemperaturen das Schwimmwasser aufheizen und im Sommer als eine entsprechend ausgelegte Stromerzeugungsanlage dienen. In einem großen Einkaufsmarkt kann eine große Solarkollektorfläche zur Heizungsunterstützung genutzt werden. In Zeiten, in den ein hoher Besucherandrang herrscht und in den daher eher gekühlt werden muss, kann das System zur Erzeugung von Strom verwendet werden.

In einem weiteren Ausführungsbeispiel kann das zweite Arbeitsmittel der Strom erzeugenden Einrichtung 20 durch ein drittes Arbeitsmittel ersetzt werden, um hinsichtlich des Temperaturbereichs ein anderes Einsatzgebiet der Strom erzeugenden Einrichtung 20 zu erreichen.

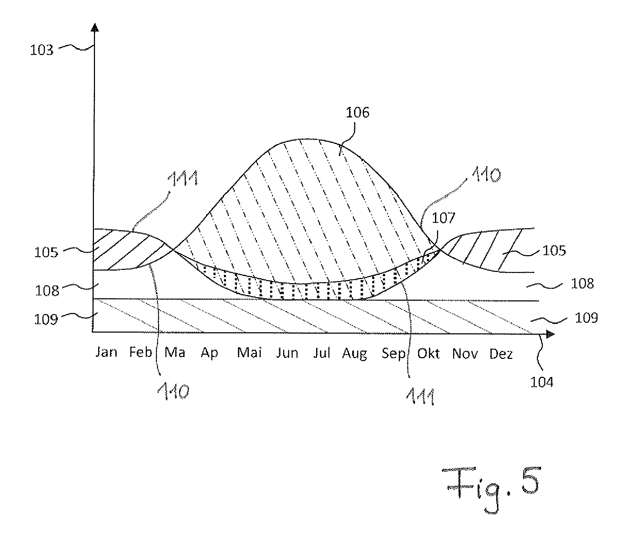

Die Wirkungsweise und die Vorteile des erfindungsgemäßen Verfahrens bzw. des erfindungsgemäßen Systems werden im Folgenden anhand von Figur 5 veranschaulicht. In dem in Figur 5 dargestellten Diagramm ist Wärmeenergie entlang der y-Achse 103 über dem jeweiligen Erzeugungs- oder Verbrauchsmonat Jan (Januar) bis Dez (Dezember) eines Kalenderjahres entlang der x-Achse 104 aufgetragen.

Die oberhalb der Felder 106 und 108 verlaufende Kurve 110 zeigt die durch die solarthermische Einrichtung (Solarkollektor 1) erzeugte Wärmeenergie. In dem Diagramm ist ferner ein Bereich 109 eingezeichnet, der den Wärmeverbrauch durch Warmwassererzeugung über das gesamte Jahr veranschaulicht. Es zeigt sich, dass die zur Erwärmung des Brauchwassers notwendige Energie ganzjährig durchschnittlich durch die solarthermisch erzeugte Wärmeenergie abgedeckt werden kann. Die überschüssige Wärmeenergie, die durch den Solarkollektor 1 produziert wird, kann zur Gebäudebeheizung verwendet werden (siehe Bereiche 108).

Der Heizbedarf eines Gebäudes ist ebenfalls in das Diagramm eingezeichnet. Die entsprechende, etwa U-förmige Kurve 111 liegt erfahrungsgemäß am Jahresbeginn bzw. am Jahresende am weitesten oben. Dem Diagramm ist zu entnehmen, dass in den Monaten Januar bis April bzw. Oktober bis Dezember der Wärmebedarf eines Gebäudes durch eine zusätzliche Heizung gedeckt werden muss (Bereiche 105), da die von dem Solarkollektor 1 erzeugte Wärmeenergie nicht ausreicht, um den gesamten Heizbedarf des Gebäudes in diesen Monaten zu decken.

Da der Heizbedarf in den Monaten April bis Oktober einerseits stark absinkt und andererseits die Sonneneinstrahlung intensiver ist, erzeugt der Solarkollektor 1 in diesen Monaten überschüssige Wärme (Bereich 106), die kostenintensiv gepuffert werden muss, so dass das System nicht überhitzt und dadurch beschädigt wird.

Bei dem erfindungsgemäßen Verfahren bzw. mit dem erfindungsgemäßen System wird nun diese überschüssige Energie des Bereichs 106 mittels der Strom erzeugenden Einrichtung 20, beispielsweise mittels eines ORC-Prozesses, verstromt. Der Wirkungsgrad dieses Prozesses ist zwar gering, jedoch wird durch diese Verwertung der überschüssigen Wärmeenergie eine Überhitzung und Zerstörung des Systems vermieden. Die aus der überschüssigen Wärme erzeugte elektrische Energie ist in dem oben dargestellten Diagramm durch die Fläche 107 veranschaulicht, welche das Energieäquivalent des erzeugten Stromes zeigt (Wirkungsgrad berücksichtigt).

Das erfindungsgemäße System benötigt demnach keine großen Speicher, um die überschüssige, von dem Solarkollektor 1 in den Sommermonaten erzeugte Wärme (siehe Bereich 106) zu puffern. Die entstehende Wärme wird durch die Strom erzeugende Einrichtung 20 verstromt. Hierdurch ist es auch möglich, die Solarkollektorfläche zu erhöhen, ohne gleichzeitig die Speicherkapazität in dem bisher notwendigen Maße anpassen zu müssen.

### Bezugszeichenliste:

- 1: Solarkollektor
- 3: Einheit
- 5: Einheit
- 7: Warmwasserspeicher
- 9: Warmwassersystem
- 11: Heizkessel
- 13: Heizungssystem
- 15, 30: Regelung oder Steuerung
- 20: Strom erzeugende Einrichtung
- 21: Wärmetauscher
- 22: Ventil
- 24: Turbine
- 25: Kondensator
- 27: Kondensatpumpe
- 28: Kühlung
- 29: Generator
- 32: Wärmeenergiespeicher
- 40: zusammengeführte Regelung oder Steuerung
- 42: Stromverbraucher

- 51, 52, 53, 54, 55, 56, 57, 58: jeweils ein Verfahrensschritt
- 60, 61, 62, 63, 64, 65, 66, 67, 68, 69: jeweils ein Verfahrensschritt

- 103: y-Achse (Wärmeenergie)
- 104: x-Achse (Zeit)
- 105: Bereich, stellt den Bedarf eines Gebäudes an mittels eines zusätzlichen Systems (Heizung) erzeugter Wärmeenergie dar
- 106: Bereich, stellt den bisher ungenutzten Betrag an solarer Wärmeenergie dar, der mittels der erfindungsgemäßen Vorrichtung zur Erzeugung von elektrischer Energie genutzt wird
- 107: Bereich, stellt den Energieinhalt des aus der Energie des Bereichs 106 erzeugten elektrischen Energie unter Berücksichtigung des Wirkungsgrads der Strom erzeugenden Einrichtung 20 dar
- 108: Bereich, stellt die von dem Solarkollektor 1 erzeugte Wärme- energie dar, welche zur Heizung des Gebäudes verwendet werden kann
- 109: Bereich, stellt die von dem Solarkollektor 1 erzeugte Wärmeenergie dar, die benötigt wird, um Warmwasser und/oder Brauchwasser eines Gebäudes zu erwärmen
- 110: Kurve, veranschaulicht die durch die solarthermische Einrichtung (Solarkollektor 1) erzeugte Wärmeenergie
- 111: Kurve, veranschaulicht den Heizbedarf eines Gebäudes

- RÜ1, RÜ2: Rückverbindungsleitung
- P1, P2: Pumpe
- T₁: Temperatur der Strom erzeugenden Einrichtung 20
- T₂: Temperatur des Heizungssystems 13
- T₃: Temperatur des Warmwassersystems 9
- T₄: Temperatur des Wärmeenergiespeichers 32
- T₅: Temperatur des Solarkollektors 1 bzw. des ersten Arbeitsmittels
- T_{S1}, TS₂, T_{S3}: erster, zweiter, dritter Temperaturschwellwert
- T_{S4}, T_{S5}: vierter, fünfter Temperaturschwellwert
- V1, V2, V3: Ventil
- V4, V5, V6: Ventil
- V7: Ventil
- VO1, VO2: Versorgungsleitung

## Patentansprüche

1. Verfahren zum Betreiben eines Systems zur Versorgung mindestens eines Wärmeverbrauchers (7, 9, 13, 32) mit Wärmeenergie, wobei das System eine solarthermischen Einrichtung (1) mit einem ersten Arbeitsmittel aufweist, mit dem die von der solarthermischen Einrichtung gewonnene Wärmeenergie übertragen wird, wobei nur dann eine Übertragung der gewonnenen Wärmeenergie durch das erste Arbeitsmittel an eine Strom erzeugende Einrichtung (20) erfolgt, wenn die Temperatur des ersten Arbeitsmittels (T₅) einen bestimmten, vorgegebenen ersten Temperaturschwellwert (T_{S1}) überschreitet, wobei die Strom erzeugende Einrichtung (20) die übertragene Wärmeenergie in elektrische Energie für die Nutzung durch den mindestens einen Stromverbraucher (42) wandelt, wobei die Strom erzeugende Einrichtung (20) vorzugsweise einen ORC-Prozess, einen Kalina-Prozess oder einen CR-Ammoniak-Prozess zur Erzeugung der elektrischen Energie aus der Wärmeenergie nutzt.

2. Verfahren nach Anspruch 1, **dadurch gekennzeichnet, dass** das erste Arbeitsmittel die Wärmeenergie an ein zweites Arbeitsmittel der Strom erzeugenden Einrichtung (20) überträgt.

3. Verfahren nach einem der vorhergehenden Ansprüche, **dadurch gekennzeichnet, dass** als weitere Bedingung für die Übertragung der gewonnenen Wärmeenergie an die Strom erzeugende Einrichtung (20) zusätzlich geprüft wird, ob die Temperatur einer Kühlung kleiner ist als der erste Temperaturschwellwert, vorzugsweise um mindestens etwa 5°K kleiner, besonders bevorzugt um mindestens etwa 10°K kleiner ist als der erste Temperaturschwellwert.

4. Verfahren nach einem der vorhergehenden Ansprüche, **dadurch gekennzeichnet, dass** als weitere Bedingung für die Übertragung der gewonnenen Wärmeenergie an die Strom erzeugende Einrichtung (20) zusätzlich geprüft wird, ob die Temperatur (T₂, T₃) mindestens eines Wärmeverbrauchers (7, 9, 13) über einen bestimmten, vorgegebenen ersten Zeitraum, vorzugsweise mindestens 5 Minuten, über oder bei einem bestimmten, vorgegebenen zweiten Temperaturschwellwert (T_{S2}) lag und/oder ob die Wärmeenergieanforderung mindestens eines Wärmeverbrauchers (7, 9, 13) einen Wärmeenergieschwellwert unterschreitet.

5. Verfahren nach einem der vorhergehenden Ansprüche, **dadurch gekennzeichnet, dass** das zweite Arbeitsmittel der Strom erzeugenden Einrichtung durch ein drittes Arbeitsmittel ersetzt wird.

6. Verfahren nach einem der vorhergehenden Ansprüche, **dadurch gekennzeichnet, dass** die Möglichkeit der Übertragung von Wärmeenergie an die Strom erzeugende Einrichtung (20) insbesondere in mindestens einem bestimmten, vorgegebenen vierten Zeitraum geprüft wird, wobei der vierte Zeitraum vorzugsweise durch eine Handeingabe oder durch eine von außerhalb des Systems übertragene Vorgabe verändert wird.

7. Verfahren nach einem der vorhergehenden Ansprüche, **dadurch gekennzeichnet, dass** die gewonnene Wärmeenergie durch das erste Arbeitsmittel zumindest in einem bestimmten, vorgegebenen fünften Zeitraum an den mindestens einen Wärmeverbraucher übertragen wird.

8. System zur Versorgung mindestens eines Wärmeverbrauchers (7, 9, 13, 32) mit Wärmeenergie sowie mit einer solarthermischen Einrichtung (1), das ein erstes Arbeitsmittel aufweist, mit dem die von der solarthermischen Einrichtung gewonnene Wärmeenergie übertragbar ist, wobei das System derart eingerichtet ist, dass nur dann eine Übertragung der gewonnenen Wärmeenergie durch das erste Arbeitsmittel (T₅) an eine Strom erzeugenden Einrichtung (20) erfolgt, wenn die Temperatur des ersten Arbeitsmittels einen bestimmten, vorgegebenen ersten Temperaturschwellwert (T_{S1}) überschreitet, wobei die Strom erzeugende Einrichtung (20) die übertragene Wärmeenergie in elektrische Energie für die Nutzung durch den mindestens einen Stromverbraucher (42) wandelt, wobei die Strom erzeugende Einrichtung (20) vorzugsweise zur Nutzung eines ORC-Prozesses, eines Kalina-Prozesses oder eines CR-Ammoniak-Prozesses zur Erzeugung der elektrischen Energie aus der Wärmeenergie eingerichtet ist.

9. System nach Anspruch 8, **dadurch gekennzeichnet, dass** die gewonnene Wärmeenergie durch das erste Arbeitsmittel an ein zweites Arbeitsmittel der Strom erzeugenden Einrichtung (20) übertragbar ist.

10. System nach einem der Ansprüche 8 bis 9, **dadurch gekennzeichnet, dass** als weitere Bedingung für die Übertragung der gewonnenen Wärmeenergie an die Strom erzeugende Einrichtung (20) zusätzlich prüfbar ist, ob die Temperatur eine Kühlung kleiner ist als der erste Temperaturschwellwert, vorzugsweise um mindestens etwa 5°K kleiner, besonders bevorzugt um mindestens etwa 10°K kleiner ist als der erste Temperaturschwellwert.

11. System nach einem der Ansprüche 8 bis 10, **dadurch gekennzeichnet, dass** als weitere Bedingung für die Übertragung der gewonnenen Wärmeenergie an die Strom erzeugende Einrichtung (20) zusätzlich prüfbar ist, ob die Temperatur (T₂, T₃) mindestens eines Wärmeverbrauchers (7, 9, 13) über einen bestimmten, vorgegebenen ersten Zeitraum, vorzugsweise mindestens 5 Minuten, über oder bei einem zweiten Temperaturschwellwert lag und/oder ob die Wärmeenergieanforderung mindestens eines Wärmeverbrauchers (7, 9, 13) einen Wärmeenergieschwellwert unterschreitet.

12. System nach einem der Ansprüche 8 bis 11, **dadurch gekennzeichnet, dass** das zweite Arbeitsmittel der Strom erzeugenden Einrichtung (20) durch ein drittes Arbeitsmittel ersetzbar ist.

13. System nach einem der Ansprüche 8 bis 12, **dadurch gekennzeichnet, dass** die Möglichkeit der Übertragung von Wärmeenergie an die Strom erzeugende Einrichtung (20) insbesondere in bestimmten, vorgegebenen vierten Zeitraum prüfbar ist, wobei der vierte Zeitraum vorzugsweise durch eine Handeingabe oder durch eine von außerhalb des Systems übertragene Vorgabe veränderbar ist.

14. System nach einem der Ansprüche 8 bis 13, **dadurch gekennzeichnet, dass** die gewonnene Wärmeenergie durch das erste Arbeitsmittel zumindest in einem bestimmten, vorgegebenen fünften Zeitraum an den mindestens einen Wärmeverbraucher (7, 9, 13, 32) übertragbar ist.

15. System nach einem der Ansprüche 8 bis 14, **dadurch gekennzeichnet, dass** der Volumenstrom des ersten Arbeitsmittels zwischen dem mindestens einen Wärmeverbraucher (7, 9, 13, 32) und der Strom erzeugenden Einrichtung (20) aufteilbar ist.
